# FASCICULE DE BREVET EUROPEEN

(11) **EP 0 436 683 B1**
(45) Date de publication et mention de la délivrance du brevet: **22.12.1993**
(21) Numéro de dépôt: 90910094.3
(22) Date de dépôt: 19.07.1990
(51) Int. Cl.: A23G 1/04, A23G 1/10, B02C 17/16

(54) **BROYEUR POUR LA FABRICATION D'UN PRODUIT FORME PAR UNE SUSPENSION DE PARTICULES SOLIDES DANS UN VEHICULE GRAS**
MÜHLE ZUR HERSTELLUNG EINER SUSPENSION BESTEHEND AUS FESTEN TEILCHEN IN EINEM FETTEN TRÄGER
CRUSHER FOR THE MANUFACTURE OF GOODS FORMED BY THE SUSPENSION OF SOLID PARTICLES IN A FATTY CARRIER

(30) Priorité: 26.07.1989 FR 8910278
(43) Date de publication de la demande: 17.07.1991
(73) Titulaire: SERVCO S.P.A., I-20121 Milano (IT)
(72) Inventeur: CHAUVEAU, Jean-Marie, CH-2023 Gorgier (CH)
(74) Mandataire: Nithardt, Roland
(86) Numéro de dépôt international: CH9000176
(87) Numéro de publication internationale: WO9101648

(56) Documents cités:
- EP-A- 0 180 976
- WO-A-85/05012
- DE-B- 1 214 982
- FR-A- 2 030 618
- GB-A- 673 617

## Description

La présente invention concerne un broyeur pour la fabrication d'un produit formé par une suspension pâteuse ou liquide de particules solides dans un véhicule gras, notamment pour fabriquer un produit alimentaire, le broyeur comportant une cuve agencée pour contenir des corps libres de broyage et ladite suspension pâteuse ou liquide, la cuve étant pourvue d'une ouverture d'entrée et d'une ouverture de sortie pour ladite suspension, un arbre rotatif s'étendant à l'intérieur de la cuve et pourvu d'éléments agitateurs agencés pour mettre en mouvement les corps de broyage sous l'effet de la rotation de l'arbre, des moyens d'entraînement pour faire tourner l'arbre, et des moyens pour introduire au moins un fluide à l'intérieur de la cuve.

D'une manière générale, les techniques de fabrication du chocolat et des produits similaires, tels que les succédanés de chocolat, les produits de couverture au chocolat, les crèmes ou pâtes à tartiner aux noisettes ou aux amandes etc, comprennent des opérations demandant beaucoup de temps et d'énergie, et elles nécessitent un gros investissement en machines. Dans le cas du chocolat, après mélange des principaux ingrédients comprenant du sucre en poudre ou cristallisé, du lait entier en poudre, de la pâte ou de la poudre de cacao, ainsi que du beurre de cacao, il s'agit d'une part d'obtenir un mélange intime des composants solides, en particulier des particules de cacao, dans les composants liquides ou pâteux, et d'autre part d'augmenter la finesse du produit en écrasant les particules solides. Les particules de cacao deviennent ainsi des sortes de flocons qui ont une grande surface spécifique et qui, grâce au contenu gras de la pâte, permettent de plastifier assez facilement le produit.

Dans la technique traditionnelle, cette phase de la fabrication se déroule d'abord dans des calandres à cylindres, puis dans des cuves appelées "conches", où la pâte est pétrie à chaud et à l'air, pendant des durées de l'ordre de 24 à 48 heures. Il s'est avéré que cette étape de conchage a des répercussions importantes sur la qualité du produit non seulement par ses effets mécaniques, mais aussi grâce à l'oxydation de certains composants par contact avec l'air, ainsi que par une modification du profil aromatique par élimination totale ou partielle de certains composés volatils, notamment des aldéhydes et des cétones. Ces effets d'oxydation par aération sont mentionnés plus en détail par H. FINCKE dans " HANDBUCH DER KAKAOERZEUGNISSE", page 225, 2ème édition, Springer-Verlag, Berlin 1965. Cependant, le conchage traditionnel nécessite des machines encombrantes, ayant une faible productivité et consommant beaucoup d'énergie.

Pour obtenir un résultat équivalent au conchage avec des investissements moindres, une technique récente consiste à pomper le mélange en continu d'un mélangeur à un ou plusieurs broyeurs à billes, servant à réduire les particules à une taille d'environ 20 µm et à homogénéiser simultanément la masse. Ensuite, le chocolat fluide issu du ou des broyeurs est exposé à l'action de l'oxygène de l'air au moyen d'appareils qui le mettent en couche mince, par exemple comme le décrit la publication WO 85/05012, avec injection simultanée d'air sur ou à travers la couche mince de chocolat. Pour avoir une bonne efficacité, un tel traitement reste malgré tout assez long par le fait que l'oxygène à beaucoup de peine à atteindre les surfaces des particules solides de cacao, celles-ci étant revêtues d'une mince pellicule de corps gras. C'est pourquoi cette technique récente n'a pas encore pu s'imposer dans la fabrication des chocolats de qualité supérieure. En outre, elle exige tout de même des équipements relativement importants.

Afin de réduire les frais de matériel, la publication DE-B-1 214 982 propose d'utiliser un broyeur du type indiqué en préambule et d'injecter à travers le fond de la cuve, pendant le broyage, de l'air chaud pour ventiler le chocolat ou de l'oxygène pur pour assurer l'oxydation voulue. Ce système semble avoir une efficacité assez faible et il ne s'est pas répandu largement.

Dans un autre genre de fabrication utilisant un broyage à sec pour fabriquer un produit en grains ou en poudre présentant une granulométrie voulue, le document EP-A-0 180 976 décrit un moulin à billes pourvu d'arbres horizontaux creux qui portent des bras radiaux également creux, pour laisser entrer de l'air dans la masse en cours de broyage afin de la refroidir. Pour obtenir cette introduction d'air, on aspire l'air et la poussière se trouvant dans la partie supérieure de la cuve, de façon à créer un fort courant d'air distribué dans toute la masse. Un tel procédé n'est pas prévu pour un broyage humide.

Par conséquent, la présente invention a pour but de créer un appareil permettant de fabriquer des produits du type indiqué plus haut, ayant une bonne productivité et demandant des investissements moindres que les techniques actuelles, tout en assurant un traitement assez efficace pour produire notamment du chocolat de qualité supérieure. En particulier, l'invention vise à perfectionner un broyeur selon le document DE-B-1 214 982 pour augmenter son efficacité.

Le broyeur selon l'invention est caractérisé en ce que lesdits moyens pour introduire un fluide comportent des orifices de distribution ménagés dans au moins certains des éléments agitateurs, un conduit d'entrée ménagé dans l'arbre rotatif, un raccord tournant disposé à proximité d'une extrémité de l'arbre rotatif et reliant ledit conduit d'entrée à au moins deux entrées stationnaires raccordées respectivement à une source d'un gaz et à une source d'un liquide, et des conduits de distribution reliant le conduit d' entrée aux orifices de distribution, lesdits éléments agitateurs pourvus d'orifices de distribution étant immergés dans ladite suspension de manière à distribuer ledit fluide dans des zones où les corps de broyage sont mis en mouvement par ces éléments agitateurs pendant la rotation de l'arbre.

La source de gaz peut comporter un dispositif de soufflage d'air, raccordé au raccord tournant. Le dispositif de soufflage d'air peut comporter un organe de stérilisation d'air. Les moyens pour introduire un fluide peuvent comporter un doseur branché entre la source de liquide et le raccord tournant.

Dans une forme de réalisation préférée, l'arbre rotatif est vertical et le raccord tournant se trouve à proximité de l'extrémité supérieure de l'arbre.

De préférence, les éléments agitateurs pourvus d'orifices de distribution sont des bras radiaux répartis de manière échelonnée le long de l'arbre rotatif.

La présente invention sera mieux comprise à l'aide de la description suivante d'une forme de réalisation, présentée à titre d'exemple non limitatif et en référence aux dessins annexés, dans lesquels :
la figure 1 est une vue schématique en élévation des principales machines d'une installation de fabrication de chocolat utilisant un broyeur à billes selon la présente invention, et
la figure 2 est une vue en coupe verticale dudit broyeur à billes.

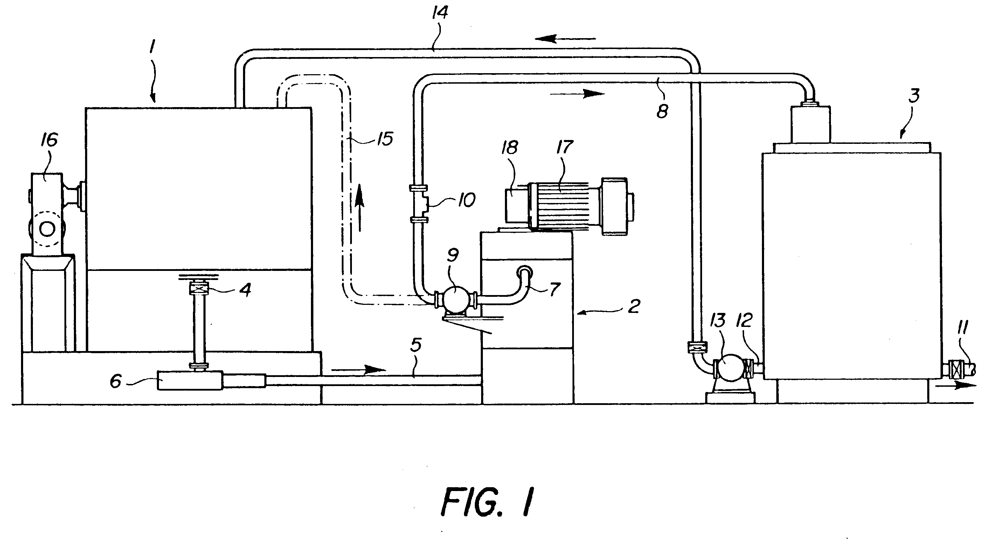

L'installation représentée à la figure 1 est destinée à fabriquer des produits alimentaires se présentant sous la forme d'une suspension de particules solides dans un véhicule gras. L'exemple décrit ici se réfère à la fabrication de chocolat, c'est-à-dire que les particules solides comprennent avant tout des particules de cacao et de sucre, tandis que le véhicule gras comprend une majorité de beurre de cacao. Cependant, la même installation est utilisable pour fabriquer d'autres produits. Elle comprend trois unités principales, entre lesquelles le produit traité, se présentant sous une forme liquide ou pâteuse, est transféré par des pompes et des conduites, à savoir un mélangeur 1, un moulin ou broyeur à billes 2 et un réservoir de conditionnement et stockage 3. D'une unité à l'autre, le produit peut circuler dans le sens indiqué par les flèches sur la figure. Une vanne de sortie 4 du mélangeur 1 est reliée à une entrée du broyeur 2 par une conduite 5 équipée d'une pompe 6 à débit réglable. Une sortie 7 du broyeur à billes 2 est reliée au réservoir 3 par une conduite 8 équipée d'une pompe 9 et d'un appareil de liquéfaction 10. Le réservoir 3 comporte une première sortie 11 par laquelle son contenu peut être évacué en vue de son utilisation, par exemple dans une ligne de moulage et de conditionnement. Une seconde sortie 12 de ce réservoir est raccordée à une pompe 13 et à une conduite de retour 14 permettant de recycler le produit, par étapes ou en continu dans le mélangeur 1. Le cas échéant, on peut aussi prévoir une conduite de retour 15 renvoyant le produit du broyeur 2 au mélangeur 1, par exemple à partir d'une vanne de distribution (non représentée) placée en aval de la pompe 9. On remarque également sur la figure un mécanisme d'entraînement 16 du mélangeur 1, ainsi que le gros moteur électrique 17 actionnant l'arbre vertical du broyeur 2 par l'entremise d'un réducteur 18. Par contre, beaucoup d'autres organes accessoires bien connus ne sont pas représentés, en particulier des organes d'alimentation et de dosage associés au mélangeur 1 et éventuellement au réservoir 3, ainsi que des organes de chauffage et/ou de refroidissement des différentes unités, par exemple par circulation d'eau chaude ou d'eau froide. La construction et le fonctionnement du broyeur à billes 2 seront décrits plus loin plus en détail. Le cas échéant, dans une installation plus complète, ce broyeur unique pourrait être remplacé par deux ou trois broyeurs raccordés en série et ayant des calibres de billes de plus en plus petits, pour réaliser une finesse croissante de broyage. Ces broyeurs peuvent fonctionner en continu.

Pour fabriquer une pâte de chocolat, on emploie l'installation de la manière suivante. Dans le mélangeur 1, on introduit les ingrédients en quantités dosées prévues par la recette, notamment du sucre en poudre ou cristallisé, du lait entier en poudre, de la pâte de cacao et/ou de la poudre de cacao, du beurre de cacao. Ces ingrédients principaux peuvent évidemment être additionnés des adjuvants habituels, tels que la lécithine de soja, et d'arômes tels que la vanilline. Le mélangeur 1 traite cette charge par agitation à chaud, pour en faire un mélange homogène constitué par une suspension des particules solides de cacao, de sucre et de lait en poudre dans un liquide gras contenant très peu d'humidité. Ce mélange peut être transféré dans le broyeur 2 par la pompe 6 sous la forme de charge complète, de charge partielle ou en continu, selon le mode de traitement adopté. Le fonctionnement en continu est préféré dans les plus grandes installations.

Dans le broyeur 2, qui sera décrit plus loin, le mélange subit simultanément un traitement de broyage des particules solides et un traitement de ventilation dans la masse. S'il le faut, le mélange peut être recyclé vers le mélangeur 1 par la conduite de retour 15, en petites quantités ou en continu, jusqu'à ce qu'on obtienne la finesse voulue, correspondant généralement à des dimensions des particules solides d'environ 20 µm.

Le produit sortant du broyeur 2 est envoyé par la pompe 9 en direction du réservoir 3, en passant à travers l'appareil de liquéfaction 10 qui améliore ses caractéristiques rhéologiques en lui appliquant des forces de cisaillement par des moyens mécaniques connus. Dans le réservoir 3, on peut appliquer au produit un traitement final destiné à améliorer son goût, par affinage du profil aromatique du produit fini de manière classique, par exemple par ventilation forcée avec de l'air conditionné et stérile, ainsi que l'addition d'arômes et de d'adjuvants technologiques tels que des agents conservateurs, épaississants, etc.

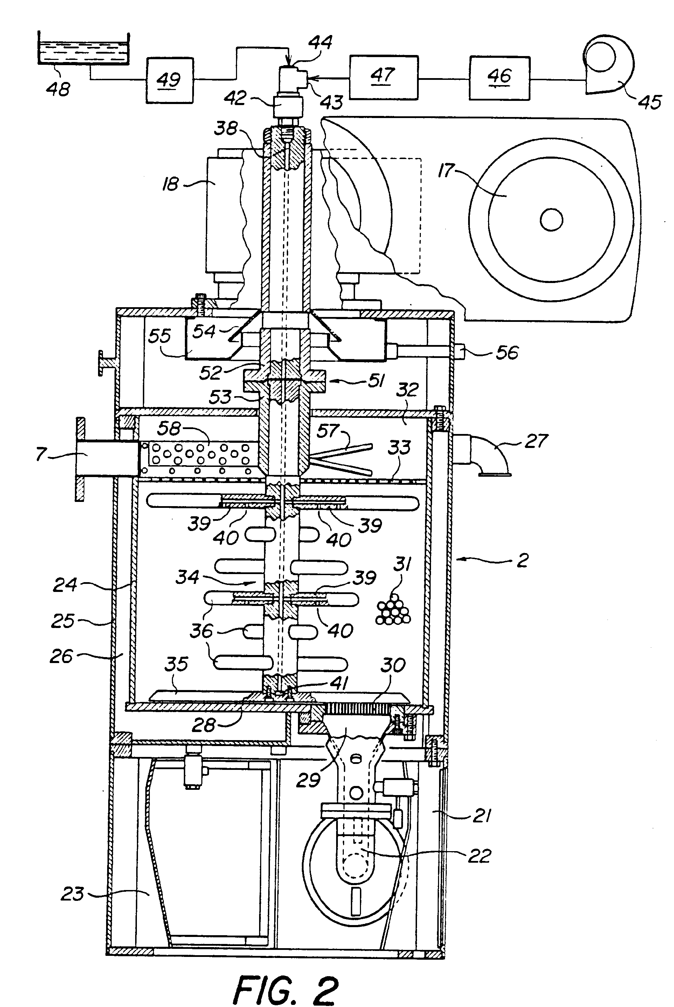

La figure 2 montre plus en détail le moulin ou broyeur à billes 2 selon la présente invention. La structure générale de ce broyeur correspond à un type de broyeur à billes classique et comprend une structure de base 21 contenant un conduit d'entrée 22 raccordé à la conduite 5, ainsi qu'un réservoir 23 de vidange du circuit de chauffage. Sur cette structure de base est montée une cuve cylindrique 24 destinée à recevoir le produit à traiter et entourée par une paroi extérieure 25 formant autour d'elle une chemise d'eau 26 raccordée par une conduite 27 à un circuit de chauffage et/ou de refroidissement commandé par thermostat, de manière à maintenir à une température prédéterminée la cuve 24 et son contenu. La cuve 24 a un fond 28 ayant une ouverture d'entrée 29 raccordée au conduit 22 et munie d'une grille 30, pour l'introduction du produit à traiter dans la cuve. Celle-ci contient en outre des corps de broyage tels que des billes métalliques 31 ayant un calibre approprié à la finesse de broyage recherchée. Une zone supérieure 32 de l'intérieur de la cuve est délimitée par un grillage 33 qui peut être traversé par le produit traité allant à la sortie 7 du broyeur, mais pas par les billes 31. Le contenu de la cuve 24, mélangé aux billes, est brassé par la rotation d'un arbre vertical 34 entraîné par le moteur 17 et le réducteur 18. Cet arbre porte des organes agitateurs fixés à l'arbre et constitués par des racleurs 35 adjacents au fond de la cuve et par des bras radiaux 36 échelonnés le long de l'arbre jusqu'à proximité de la grille supérieure 33. Les bras 36 s'étendent de préférence radialement et sont répartis de manière à balayer sensiblement tout le volume occupé par le produit à traiter. La forme extérieure de leur section transversale peut être choisie librement en vue de produire les mouvements voulus des billes 31. De manière connue, les mouvements des billes 31 ont pour effet de broyer les particules solides en suspension.

Un aspect original du broyeur à billes 2 est le fait qu'il comporte des moyens de distribution d'un gaz et/ou d'un liquide au sein même de la masse subissant le broyage. A cet effet, l'arbre 34 comporte un conduit axial d'entrée 38 qui s'étend sur toute sa longueur et qui est raccordé à des conduits de distribution 39 ménagés dans les bras 36 et débouchant à la surface de ces bras par plusieurs orifices de distribution 40. Ces orifices peuvent avoir des orientations différentes sur les différents bras, afin d'assurer une dispersion aussi complète que possible du fluide dans la masse. L'extrémité inférieure du conduit d'entrée 38 est obturée par un bouchon à vis 41, tandis qu'à l'extrémité supérieure de l'arbre ce conduit est pourvu d'un raccord tournant 42 ayant deux entrées stationnaires 43 et 44. L'entrée 43 est raccordée à un dispositif de soufflage d'air conditionné stérilisé, comprenant par exemple une soufflerie 45, un filtre 46 et un stérilisateur 47 délivrant l'air stérile à une température prédéterminée. L'entrée 44 est destinée à l'introduction d'additifs liquides. Dans cet exemple, il s'agit de lécithine de soja, contenue dans un réservoir 48 et délivrée sur commande par un micro-doseur 49.

A part la présence des conduits 38 et 39 et du raccord tournant 42, l'arbre rotatif 34 peut être construit de n'importe quelle manière connue dans ce genre de broyeurs. Dans cet exemple, il comporte un joint longitudinal 51 réalisé grâce à des manchons extérieurs 52, 53 et facilitant l'entretien. Au-dessus de ce joint, l'arbre est muni d'un déflecteur conique 54 renvoyant dans une gouttière annulaire 55 et une évacuation 56 les éventuels écoulements d'huile provenant du réducteur 18, afin d'éviter qu'ils puissent atteindre le produit. Dans la partie supérieure 32 de la cuve, l'arbre porte également des éléments agitateurs 57 et un racleur 58 assurant une évacuation régulière du produit vers la sortie 7.

Grâce à cette construction, le broyeur à billes 2 permet, d'une manière générale, d'effectuer efficacement un traitement complémentaire par injection d'un gaz ou d'un liquide au sein même du produit, en même temps que le broyage. Dans le présent exemple, un aspect particulièrement avantageux du procédé de fabrication de chocolat réside précisément dans la possibilité de traiter le mélange par ventilation en continu, au moment et à l'endroit où le broyage crée de nouvelles surfaces libres sur les particules de cacao, de sucre et de lait en poudre. De cette manière, l'oxygène de l'air injecté peut produire l'oxydation voulue sur le cacao beaucoup plus vite que dans les installations selon l'art antérieur, et en outre sans nécessiter les appareils spéciaux mentionnés plus haut et destinés à mettre le chocolat en une couche mince pour son aération. L'air introduit dans le broyeur 2 peut facilement être stérilisé, si bien que tout le traitement s'effectue dans une atmosphère contrôlée à l'intérieur du broyeur. Dans certains cas, la ventilation du chocolat dans le broyeur 2 sera suffisante. Dans d'autres cas, on peut prévoir une ventilation secondaire, par des moyens simples, à l'intérieur du réservoir 3. A la place du traitement par ventilation ou en complément de celui-ci, les conduits 38 et 39 sont particulièrement utiles pour injecter de la lécithine du réservoir 48 dans le produit en cours de broyage, afin de corriger sa viscosité qui est modifiée par l'augmentation progressive de la surface spécifique des particules solides. Cette correction immédiate et très efficace, parce qu'elle s'effectue à l'endroit et au moment où la viscosité est modifiée par le broyage et dans toute la masse en même temps, peut être contrôlée facilement par surveillance de la puissance demandée par le moteur 17. On peut évidemment envisager l'injection d'autres liquides favorisant le traitement, par exemple un liquide tensio-actif.

La présente invention n'est pas limitée à l'exemple de réalisation et d'application décrit ci-dessus. En particulier on remarquera qu'un broyeur tel que le broyeur 2 s'applique non seulement à la fabrication de chocolat ou d'autres produits alimentaires analogues, mais à tout autre produit se présentant sous la forme générale d'une suspension pâteuse ou liquide de particules solides dans un véhicule gras, lorsque ces particules solides doivent subir un broyage. Une telle application se présente par exemple dans la fabrication des encres d'imprimerie ou de certaines peintures. Il est évident que la nature et la qualité des matériaux constituant les différents composants du broyeur seront choisies en fonction des produits à traiter et de l'évolution des techniques dans le domaine d'application concerné.

D'autre part, le traitement de ventilation opéré en même temps que le broyage ne vise pas toujours l'obtention d'une oxydation. Au contraire, on peut ventiler la masse au moyen d'un autre gaz dépourvu d'oxygène, en particulier au moyen d'azote pour la déshumidifier en évitant une oxydation considérée comme nuisible, par exemple dans la préparation d'une crème à tartiner à base de noisettes.

## Revendications

1. Broyeur pour la fabrication d'un produit formé par une suspension pâteuse ou liquide de particules solides dans un véhicule gras, notamment pour fabriquer un produit alimentaire, le broyeur comportant une cuve (24) agencée pour contenir des corps libres de broyage (31) et ladite suspension pâteuse ou liquide, la cuve étant pourvue d'une ouverture d'entrée (29) et d'une ouverture de sortie (7) pour ladite suspension, un arbre rotatif (34) s'étendant à l'intérieur de la cuve et pourvu d'éléments agitateurs (36) agencés pour mettre en mouvement les corps de broyage sous l'effet de la rotation de l'arbre, des moyens d'entraînement pour faire tourner l'arbre, et des moyens (38-48) pour introduire au moins un fluide à l'intérieur de la cuve (24), caractérisé en ce que lesdits moyens pour introduire un fluide comportent des orifices de distribution (40) ménagés dans au moins certains des éléments agitateurs (36), un conduit d'entrée (38) ménagé dans l'arbre rotatif, un raccord tournant (42) disposé à proximité d'une extrémité de l'arbre rotatif et reliant ledit conduit d'entrée (38) à au moins deux entrées stationnaires (43, 44) raccordées respectivement à une source d'un gaz (45) et à une source d'un liquide (48), et des conduits de distribution (39) reliant le conduit d'entrée aux orifices de distribution, lesdits éléments agitateurs (36) pourvus d'orifices de distribution étant immergés dans ladite suspension de manière à distribuer ledit fluide dans des zones où les corps de broyage (31) sont mis en mouvement par ces éléments agitateurs pendant la rotation de l'arbre.

2. Broyeur selon la revendication 1, caractérisé en ce que ladite source d'un gaz comporte un dispositif de soufflage d'air (45-47), raccordé au raccord tournant (42).

3. Broyeur selon la revendication 2, caractérisé en ce que le dispositif de soufflage d'air comporte un organe de stérilisation d'air (47).

4. Broyeur selon l'une des revendications précédentes, caractérisé en ce que lesdits moyens pour introduire un fluide comportent un doseur (49) branché entre la source de liquide (48) et le raccord tournant.

5. Broyeur selon l'une des revendications précédentes, caractérisé en ce que l'arbre rotatif (34) est vertical et en ce que le raccord tournant (42) se trouve à proximité de l'extrémité supérieure de l'arbre.

6. Broyeur selon l'une des revendications précédentes, caractérisé en ce que les éléments agitateurs (36) pourvus d'orifices de distribution (40) sont des bras radiaux répartis de manière échelonnée le long de l'arbre rotatif.

## Patentansprüche

1. Mühle zur Herstellung eines Produktes, gebildet aus einer pastenförmigen oder flüssigen Suspension von festen Partikeln in einem fetten Träger, insbesondere um ein Nahrungsmittel herzustellen, wobei die Mühle folgendes aufweist: einen Behälter (24), der dazu dient, die freien Mahlkörper (31) und die pastenförmige oder flüssige Suspension aufzunehmen, wobei der Behälter mit einer Eintrittsöffnung (29) und einer Austrittsöffnung (7) für die Suspension versehen ist, eine rotierende Welle (34), die sich in das Innere des Behälters erstreckt, und die mit Rührelementen (36) versehen ist, die dazu dienen, die Mahlkörper unter der Einwirkung der Wellendrehung in Bewegung zu bringen, desweiteren Antriebseinrichtungen, um die Welle in Drehung zu versetzen und Einrichtungen (38 bis 48) um mindestens eine Flüssigkeit in das Innere des Behälters (24) zu bringen,
**dadurch gekennzeichnet**, daß
die Einrichtungen zum Einbringen einer Flüssigkeit Verteilöffnungen (40) aufweisen, die in mindestens einigen der Rührelemente (36) vorgesehen sind, sowie einen in der rotierenden Welle vorgesehenen Zulaufkanal (38) und einen, in der Nähe eines Endes der rotierenden Welle vorgesehenen und den Zulaufkanal (38) mit mindestens zwei stationären Zuläufen (43,44) verbindenden Drehanschluß (42), wobei die zwei stationären Zuläufe jeweils an eine Versorgung mit einem Gas (45) bzw. an eine Versorgung mit einer Flüssigkeit (48) angeschlossen sind, und Verteilkanäle (39), welche den Zulaufkanal mit den Verteilöffnungen verbinden, wobei die mit Verteilöffnungen versehenen Rührelemente (36) in die Suspension eingetaucht sind, so daß sie die Flüssigkeit in Bereichen verteilen, wo die Mahlkörper (31) während der Drehung der Welle durch die Rührelemente in Bewegung gesetzt sind.

2. Mühle nach Anspruch 1,
**dadurch gekennzeichnet**, daß
die Versorgung mit einem Gas eine Vorrichtung zum Einblasen von Luft (45 bis 47) aufweist, die mit dem Drehanschluß (42) verbunden ist.

3. Mühle nach Anspruch 2,
**dadurch gekennzeichnet**, daß
die Vorrichtung zum Einblasen von Luft eine Einrichtung zum Sterilisieren von Luft (47) aufweist.

4. Mühle nach einem der vorhergehenden Ansprüche,
**dadurch gekennzeichnet**, daß
die Einrichtungen zum Einbringen einer Flüssigkeit ein Dosiergerät (49) aufweisen, das zwischen der Versorgung mit Flüssigkeit (48) und dem Drehanschluß eingeschaltet ist.

5. Mühle nach einem der vorhergehenden Ansprüche,
**dadurch gekennzeichnet**, daß
die rotierende Welle (34) vertikal ist, und daß sich der Drehanschluß (42) in der Nähe des oberen Endes der Welle befindet.

6. Mühle nach einem der vorhergehenden Ansprüche,
**dadurch gekennzeichnet**, daß
die mit Verteilöffnungen (40) versehenen Rührelemente (36) radiale Arme sind, die entlang der rotierenden Welle gestaffelt verteilt sind.

## Claims

1. Mill for the manufacture of a product formed of a pasty or liquid suspension of solid particles in a fact vehicle, particularly for the manufacture of a food product, said mill comprising a vat (24) disposed to hold unattached crushing means (31) and said pasty or liquid suspension, the vat being provided with an inlet opening (29) and an outlet opening (7) for said suspension, a rotating shaft (34) extending inside the vat and having agitating elements (36) disposed to set the crushing means in motion under the effect of shaft rotation, drive means to turn the shaft, and means (38-48) for introducing at least one fluid into the vat (24), characterized in that said means of fluid introduction comprise distribution orifices (40) disposed in at least certain of the agitating elements (36), an inlet conduit (38) disposed in the rotating shaft, a rotatable fitting (42) disposed near an extremity of the rotating shaft and connecting said inlet conduit (38) to at least two stationary inlets (43, 44) respectively connected to a gas source (45) and a liquid source (48), and distribution conduits (39) connecting the inlet conduit with the distribution orifices, said agitating elements (36) with distribution orifices being immersed in said suspension so as to distribute said fluid into the areas where the crushing means (31) are set in motion by said agitating elements during rotation of the shaft.

2. Mill according to claim 1, characterized in that the gas source comprises an air blowing device (45-47) connected to the rotatable fitting (42).

3. Mill according to claim 2, characterized in that the air blowing device comprises an air sterilization means (47).

4. Mill according to any of the preceding claims, characterized in that said means for fluid introduction comprises a dosing dispenser (49) connected to said source and to the inlet conduit (38).

5. Mill according to any of the preceding claims, characterized in that the rotating shaft (34) is vertical and in that the rotatable fitting (42) lies near the upper extremity of the shaft.

6. Mill according to any of the preceding claims, characterized in that the agitating elements (36) with distribution orifices (40) are radial arms disposed along the rotating shaft at measured intervals.
